# EUROPEAN PATENT APPLICATION

(11) **EP 4 835 705 A1**
(43) Date of publication of application: **04.11.2026**
(21) Application number: 25172988.5
(22) Date of filing: 28.04.2025
(51) Int. Cl.: G06F 21/57, G06F 9/4401, G06F 11/14, H04L 67/00

(54) **SYSTEM AND METHOD FOR BIDIRECTIONALLY OPERATING A CLIENT COMPUTER SYSTEM**

(71) Applicant: Hapag-Lloyd AG, 20095 Hamburg (DE)
(72) Inventor: Wyrowinski, Michal, 20095 Hamburg (DE); Trofimov, Kirill, 20095 Hamburg (DE); Okulski, Michal, 20095 Hamburg (DE); Meske, Karsten, 20095 Hamburg (DE)
(74) Representative: Maikowski & Ninnemann Patentanwälte Partnerschaft mbB

(57) **Abstract**

System for bidirectionally operating a client computer system (1) connectable or connected with a server computer system (10) with
the client computer system (1) configured to send a boot-to-https(s) request (101) to the server computer system (10), in particular a cloud computer system,
in reply to the boot-to-http(s) request (101), the server computer system (10) is configured to send a system request (102) to the client computer system (1), the system request (102) comprising an instruction to the client computer systems (1) with at least two options (A, B) for initiating and / or controlling the further communication with between the client computer system (1) and the server computer system (10),
the client computer system (1) further configured to reply to the system request (102) with a choice request (103) based on one (A'; B') of the at least two options (A, B) to the server computer system (10) initiating and / or controlling the further communication (104) between the client computer system (1) and the server computer system (10). The invention is also related to a method and a computer-readable medium and a data carrier signal.

## Description

The instant invention relates to a system of a client computer system operable with a server computer system with the features of claim 1, a method for bidirectionally operating a client computer system with a server computer system with the features of claim 13, a computer-readable medium with the features of claim 15 and a data carrier signal with the features of claim 16.

Operating systems are essential for client computer systems as they enable basic functions such as e.g. file handling, data communication and mail handling. If the operating system of a client computer system is dysfunctional or is compromised for whatever reason, said computer system will not be able to perform satisfactorily.

The reasons for a dysfunctional operating system on a computer system can e.g. be an internal error or failure, preventing the normal functioning. But client computer systems are also increasingly prone to attacks by external agents, such as viruses, ransom ware and similar means which can leave the operating system compromised or even dysfunctional. In case of a compromised operating system the client computer system might be even able to function to some extent, but the user can no longer trust the client computer system.

As current businesses, e.g. such as logistic businesses, have distributed client computer systems all over the world continuously operating, compromised and / or dysfunctional client computer systems pose a business risk.

In either case, this means that the operating system of the client computer system can no longer perform the function as required.

Therefore, secure systems and methods are required allowing at least a partial functioning of the client computer system that has become dysfunctional and / or compromised.

This is addressed by a system with the features of claim 1. This system is for bidirectionally operating a client computer system connectable or connected with a server computer system. This means that the client computer system and the server computer system exchange data and commands in both directions, i.e. the server computer system does not take unilaterally control of the client computer system.

The client computer system can e.g. be a desktop computer, a laptop computer, a tablet computer, a distributed computer system or a mobile computing device such as a smartphone.

First, the client computer system is configured to send a boot-to-https(s) request to the server computer system, in particular a cloud computer system. A boot-to-http(s) request is part of a method in which the boot process is e.g. not started from a memory (e.g. a hard drive) of the computer system but the boot process is effected through the call to an http(s) address on a different computer system, in particular a cloud computer system and / or source computer. That call enables the boot procedures. Data, programs, files etc., required for the booting, are made available through the http(s) address, i.e. the different computer.

Secondly, in reply to the boot-to-http(s) request, the server computer system, in particular a cloud computer system is configured to send a system request to the client computer system, the system request comprising an instruction to the client computer systems with at least two options for initiating and / or controlling the further communication between the client computer system and the server computer system. By providing at least two options, it is possible for the client computer system to react flexibly how to recover from the dysfunctional and / or compromised state.

Then, the client computer system is further configured to reply to the system request with a choice request based on one of the at least two options to the server computer system initiating and / or controlling the further communication between the client computer system and the server computer system.

Therefore, the recovery of the client computer system is initiated by the bidirectional exchange of the boot-to-http(s) request, the system request and the choice request between the client computer system and the server computer system. The selected option then controls, how the actual recovery is performed. Several embodiments for this are described below.

In one embodiment, the boot-to-http(s) request is enabled through an embedded BIOS (Basic-Input/Output System) setting of the client computer system, the BIOS setting usable during a start-up procedure of the client computer system. The use of the BIOS ensures that the recovery of the client computer system is not easily compromised by some malware in the memory of the client computer system.

In addition, or alternatively it is possible that a signal from the client computer system triggers a program on a hardware device, in particular an USB-Stick, connected to the client computer system, the hardware device then enabling the boot-to-http(s) request. This means that a physical device, i.e. the hardware device can be connected to the client computer system to enable the bidirectional sequence of requests to recover the client computer system. This can in particular be used for legacy systems.

In a further embodiment, the boot-to-http(s) request and / or the selection of one of the options is automatically triggered at the client computer system if a predetermined condition and / or parameter of the client computer system is met. One predetermined condition could e.g. be a signal of an antivirus program that some malware is operating or attempts to operate on the client computer system. Given this signal, the client computer system can initiate the boot-to-http(s) request automatically.

In addition, or alternatively, it is possible that an user interaction at the client computer system triggers the boot-to-http(s) request. This would enable a user to choose the option which is best for him / her at this moment for recovering the client computer system.

One possible option comprises an instruction to download an operating system image from the server computer system, in particular from a cloud system of the server computer system and / or the instruction This means that a program image containing an operating system is acquired from an external system, typically a cloud computer system, and then installs automatically on the client computer system during the recovery process, for instance a Windows operating system.

. In this case installation means that the operating system is permanently installed on a permanent storage. During the installation a user cannot operate the client computer system, until the installation is completed. This embodiment is also termed as bare-metal-recovery.

In an alternative embodiment, an option comprises instructions to use and / or install a business continuity operating system on the client computer system, in particular using a PXE boot file. In particular, the business continuity system comprises a mail connectivity function, an office connectivity function, a corporate connectivity function, a spreadsheet function, a corporate information function and / or network function. This embodiment takes a different approach, an operating image is downloaded and executed in memory, in particular RAM and / or a hard drive of the client computer system. In this case the business continuity is in place and the user can still operate the client computer system, e.g. if only in a limited way.

Independently, which option is used in one embodiment, the server computer system automatically selects which service or image server of the server computer system is used for selecting the operating system image to the client computer system, in particular depending on the lowest latency. Generally, the server computer system can be a network of computers or a cloud computer system with distributed resources. By automatically deciding which resources are used for the recovery of a specific client computer system, recovery can be accelerated. The latency can be influenced e.g. by the available data rates and / or the geographical location.

To ensure, that the recovery takes place safely, the server computer system can in one embodiment be configured to validate and / or authenticate the operating system image, the business continuity operating system and / or the client computer system. The software used in the recovery needs to be validated to prevent the introduction of further or different malware. It is also useful that the client computer system itself is authenticated to ensure that it has the required rights to use the server computer system in the recovery.

It is possible that the system image or the business continuity operating system comprise a Windows system, an Android system, a Unix system, Chrome system, Mac OS system or an iOS system.

In one embodiment before the reimaging with the operating system image, a file deletion, a memory clean or a disk wipe is automatically performed on the client computer system. This can ensure that no malware which has compromised the client computer system is present before the recovery process begins.

After the reimaging with the operating system image or after the initialization of the business continuity operating system it is also possible that a post installation routine is performed to delete e.g. longer necessary files and / or analyze the data for potential future use. The analysis can e.g. be used to determine a cause for the affected functionality of the client computer system.

It is also after the reimaging with the operating system image or after the initialization of the business continuity operating system the client computer systems are automatically rebooted and in particular connected to a computer network. This would conclude the recovery process.

The issue mentioned above is also addressed by a method with the features of claim 14, computer-readable medium and the data carrier signal.

Embodiments will now be described by way of example only, with reference to the Figures, in which:
- Fig. 1: shows an embodiment of a method or a system for bidirectionally operating a client computer system;
- Fig. 2: shows a further embodiment of the method or system described in Fig. 1;
- Fig. 3: shows an embodiment of the method or the system using a reimaging of the client computer system with an operating system (bare metal recovery);
- Fig. 4: shows a further embodiment of the method or the system using a reimaging of the client computer system with an operating system (bare metal recovery);
- Fig. 5: shows an embodiment of the method or the system using a business continuity operating system;
- Fig. 6: shows a further embodiment of the method or the system using a business continuity operating system and PXE boot files;
- Fig. 7: shows an example of the use of an iPXE boot file.

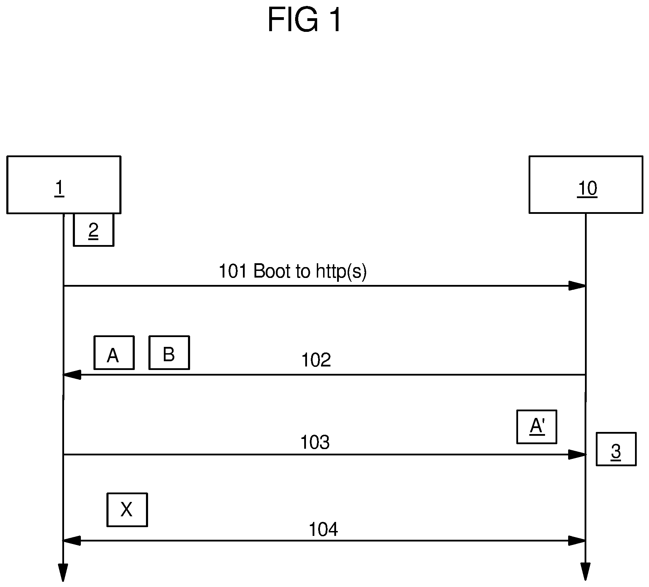

In Fig. 1 an embodiment of the method or the system is shown, describing the basic setup; in particular, the bidirectional communication between a client computer system 1 and a server computer system 10. Bidirectional communication means here that the data transfer between the systems 1, 10 is not only in one direction, e.g. the server computer system 10 in the embodiment does not merely store data unidirectionally on the client computer system 1.

In the following, only one client computer system 1 will be shown. But, as mentioned above, the embodiments are applicable to cases in which many client computer systems 1 are communicating bidirectionally with the server computer system 10.

In any case, the client computer system 1 can e.g. be a computer system (e.g. laptop, tablet desktop), a mobile device (e.g. a smartphone, a gaming device), a set top box or any other user equipment.

The server computer system 10 can be or can comprise e.g. one computer network and / or a cloud computer network providing services to one or in most cases to many client computer systems 1. Again, for the sake of brevity, the communication between one client computer system 1 and one server computer system 10 is described. The server computer system 10 can comprise a dedicated computer or a network of computers or a cloud computer system.

In case the client computer system 1 becomes dysfunctional and / or compromised by some malware, the client computer system 1 sends a boot-to-http(s) request 101 to the server computer system 10. This boot-to-http(s) request 101 can e.g. be automatically triggered at the client computer system 1 if some predetermined condition is met, e.g. through some signal from a security or anti-virus program is received. Alternatively or in addition, a user interaction might trigger the boot-to-http(s) request 101.

A boot-to-http(s)-request 101 allows the booting of a computer system from a URL via a http(s)-address. This allows the rapid transmission of large files (e.g. OS images, kernels with a root-filesystem etc.) from a server outside the local network of the client computer system 1. The boot-to-http(s) request 101 can be enabled through an embedded BIOS setting 2 of the client computer system 1 which is operable during a start-up procedure of the client computer system 1. The embedding in the BIOS ensures that that the request is genuine and not corrupted by a compromised client computer system 1.

In reply to the boot-to-http(s) request 101 a system request 102 is sent from the server computer system 10 to the client computer system 1. This system request 102 comprises at least one instruction to the client computer system 1 with at least two options A, B. Those options can determine the further communication between the client computer system 1 and the server computer system 10,

In this example, only two options A, B are used. In principle, it is possible to use more than two options A, B for determining the further communication between the client computer system 1 and the server computer system 10.

In the embodiment shown in Fig. 1, the two options A, B are intended to be displayed for a user of the client computer system 1.

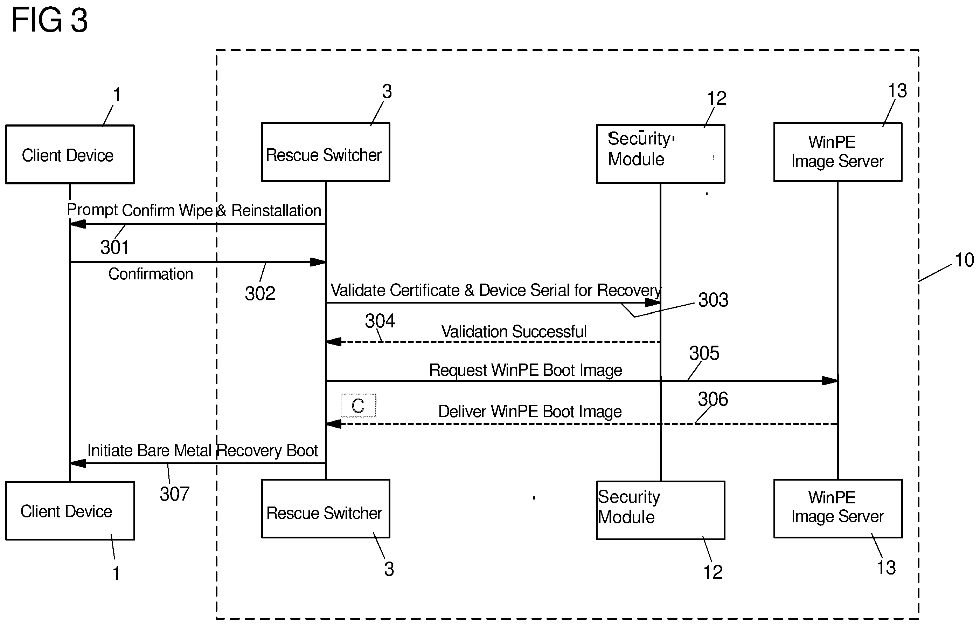

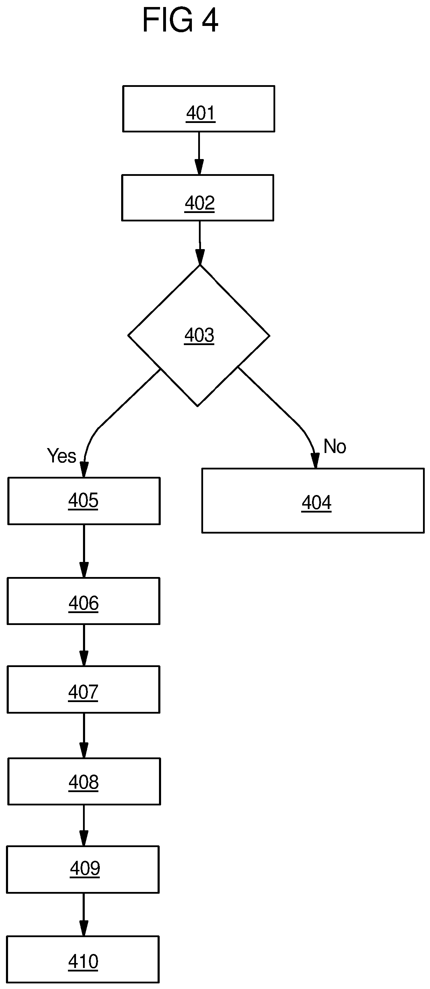

For example, option A (see Fig. 3 and 4) can refer to a complete reimaging of the client computer system 1, i.e. the downloading and installing of a complete image of the operating system to the client computer system 1. Option B can refer to the initiation of a boot process using a Business Continuity Operating System and PXE boot files as described in Fig. 4.

Here, the options A, B are intended to be chosen by a user of the client computer system 1. It is also possible that the choice between the options A, B is made automatically based on one or more system or operating parameters and / or conditions of the client computer system 1. The operating parameter and / or conditions can e.g. include information (e.g. program version, add-ins etc.) about the operating system used on the client computer system, information about drivers and / or the BIOS data. The client computer system might operate under different conditions and those conditions can e.g. be evaluated so that the recovery through the bidirectional recovery method is adapted to the determined specifics of the client computer system.

The server computer system 10 comprises a software or hardware device - in following termed rescue switcher 3 - which can switch between the two options A, B. The selected option A', B' is transmitted to the server computer system 10.

Therefore, the server computer system 10 comprises a single point of entry 3 for the selection of both options mentioned above. This single point entry 3 is termed "Rescue Switcher" 3 as in many cases, the selection between the options A, B will take place in the context of the rescuing of a dysfunctional and / or comprised client computer system 1.

So, one of the two methods "bare metal recovery" or "business continuity operating system" can be selected through the rescue switcher 3, both options are described below in the context of the figures.

Referring to Fig. 1, once the options A, B are received by the client computer system 1, a selection is made (by a user and / or automatically) and the selected option A' is transmitted to the server computer system 10 (step 103).

In response, the server computer system 10 initiates the further communication by sending e.g. an operating image C to the client computer system 1. Alternatives for this option will be described in context of Fig. 3 and 4. Alternatives using the business continuity operating system are described e.g.in the context of Fig. 4 to 7.

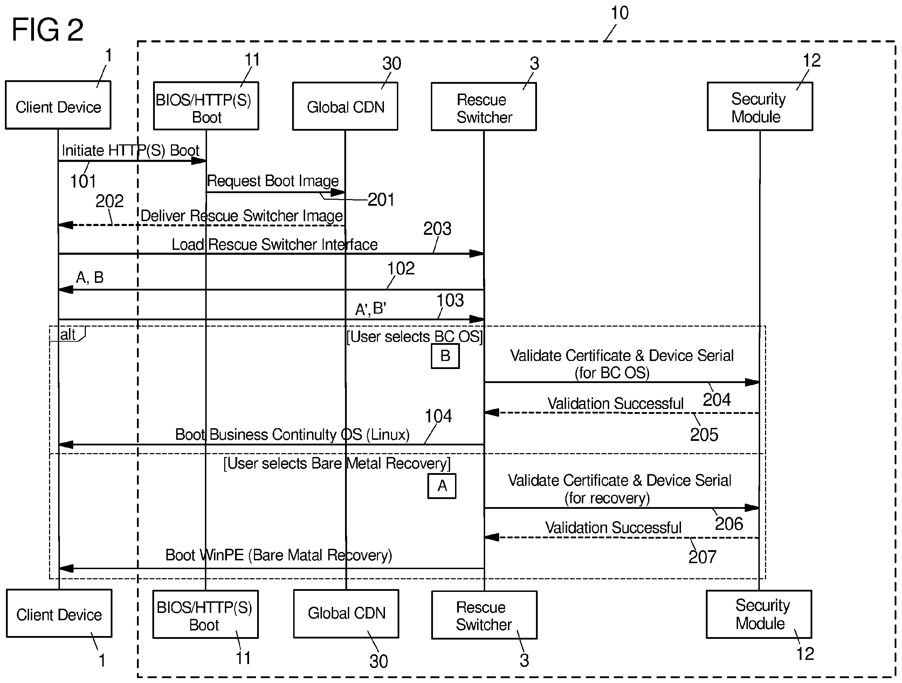

In Fig. 2, the basic setup is the same as described in the context of Fig. 1, but it is shown with some further details, in particular in respect to the switching process between the options A, B.

In the sequence diagram of Fig. 2, the data exchange within the server computer system 10 is also shown in more detail than in Fig. 1 and the selection of the options A, B is described.

As in the embodiment shown in Fig. 1, the dysfunctional and / or compromised client computer system 1 sends a boot-to-http(s) request 101 to the server computer system 10. The server computer system 10 here comprises an dedicated entry point 11 for the boot-to-http(s) request 101, a global content delivery network (CDN) 30, the rescue switcher 3 and a security module 12. It is possible that the rescue switcher 3 comprises the functionality of the entry point 11.

The boot-to-http(s) request 101 to the entry point 11 triggers the request of a boot image 201 from the CDN 30. The CDN 30 then replies with the transmission of a rescue switcher image 202 to the client computer system 1. Alternatively, the CDN 30 could query the client computer system 1 for at least one operating parameter and / or operating condition which could be used automatically to decide which option A, B is chosen for the client computer system 1.

After the rescue switcher image is executed on the client computer system 1, a rescue switcher interface is transmitted 203 to the rescue switcher 3 within the server computer system 10.

The two options A, B, here two boot options, are transmitted in the form of a system request 102 to the client computer system 1 and e.g. displayed or processed. In the context of the embodiments described herein, only two options are used. In principle, more than two options A, B can be used.

Subsequently, the client computer system 1 responds to the system request 102 with a choice request 103 to the rescue switcher 3.

In Fig. 2 the two alternatives of the options A, B are shown.

In case the client computer system 1 selects option B (i.e. the business continuity operating system), a validation of a certificate is requested 204. In the embodiment shown in Fig. 2, a request for a certificate and device serial number validation is sent from the rescue switcher 3 to the security module 12. This is to ensure that the client computer system 1 is authorized to receive the business continuity operating system.

If the validation is successful 205, the further communication 104 is enabled, i.e. the business continuity operating system (e.g. Linux) is started on the client computer system 1.

In case the client computer system 1 selects option A (e.g. the bare metal recovery), a validation of a certificate is requested 206. In the embodiment shown in Fig. 2, a request for a certificate and device serial number validation is sent from the rescue switcher 3 to the security module 12. This is to ensure that the client computer system 1 is authorized to receive the bare metal recovery image or a rescue operating system.

If the validation is successful 207, the further communication 104 is enabled, i.e. the operating system image C is started on the client computer system 1.

In Fig. 3 and 4, embodiments of the methods or systems shown in Fig. 1 and 2 are described, in which the first option A is chosen. This means that the client computer system 1 automatically and / or with a user instruction is caused to download 104 an operating system image C from the server computer system 10. The server computer system 10 can e.g. be or comprise a cloud system.

The downloaded operating system image C can e.g. be a Windows based system. In other embodiments it could be e.g. an Android system, a Chrome system, a Mac OS system, an iOS system or a UNIX system, in particular a Linux system depending on the operating system used and / or required by the client server system 1. The reimaging of the client server system 1 can be termed as a "bare metal recovery", being a streamlined method for restoring the client computer system 1 to a clean state.

As will be described below, this embodiment provides an automated process, increasing the speed and the safety of the process. This is in particular important in the case that many client computer systems 1 have to be reimaged at the same time. The automated reimaging processes ensure uniform states in the client computer systems 1 after the reimaging.

The automated download can e.g. be effected from a cloud system (e.g. content delivery system) of the purveyor of the operating system image C, e.g. Microsoft's Update Repository Storage. This ensures the safety and currency of the operating system images C.

In the embodiment of Fig. 3, the server computer system 10 comprises the rescue switcher 3, the security module 12 and an image server 14.

In preparation of the reimaging, a disk wipe on the client computer system 1 can be performed. Therefore, the rescue switcher 3 can prompt 301 the client computer system 1 to confirm the execution of a disk wipe. The disk wipe ensures that no harmful programs or data remain on the client computer system 1. This can e.g. be effected by overwriting the data in a storage such as a hard drive.

In response, either automatically and / or with a user input, a confirmation about the disk wipe is sent 302 to the rescue switcher 3.

Subsequently, a request for a certificate and device serial number validation is sent 303 from the rescue switcher 3 to the security module 12. This is to ensure that the client computer system 1 is authorized to receive the operating system image C. If the validation is successful 304, the operating system image C is requested 305 from the image server 13 and delivered 306 to the rescue switcher 3.

Then, the booting from the operating image is initiated 307 on the client computer system 1.

The embodiment shown in Fig. 4 starts 401 with a boot process of the client computer system 1 into a Windows Preinstallation environment (WinPE). This instance of the "boot-to-http(s)" request 101 is described in the context of Fig. 1 and 2 above.

In the subsequent step 402, a user of the client computer system 1 receives a number of options A, B he / she can choose from and / or which are processed automatically by the client computer system 1.

In next step 403, the client computer system 1 checks if a proper choice is made. If not (step 404), the client computer system 1 is rebooted without reimaging the operating system.

If a proper choice A, B is selected, the memory system (e.g. comprising a disk drive) is prepared (step 405) for the installation of the new operating system image C. This can include the deletion of files to free space, the forced overwriting of the memory at least partially to delete malware, security checks and the like.

In step 406, the operating system image C is downloaded from the appropriate server computer system 10 and subsequently automatically expanded (step 407) in the memory of the client computers system 10.

Once the operating system is installed and optionally authenticated, the drivers for the client computer system 1 are installed (step 408) so that e.g. communication protocols, printer protocols and the like are installed.

After the installation is completed, post installation routines (e.g. deletion of unnecessary files) are performed in step 409.

After the completion, the client computer system 1 is rebooted (step 410) using the newly installed computer operating system. The rebooting can also automatically reconnect to a service of the server computer system 10, enabling the normal use on the client computer system 1, but now in a clean state.

It is possible that all or at least one of the steps 401 to 410 include feedback to the user of the client computer system 1, so that the user is informed about the progress and possible issues during the reimaging. If e.g. malware was found, this is recorded e.g. in a log file. It is also possible that some or all steps are automatically logged so that the central computer systems 10 has a record what was actually done with the client computer system 1.

This exemplary Windows OS Reimaging process within a Bare Metal Recovery solution provides a scalable, efficient and secure method for restoring systems. The restoring is performed automatically and without user interaction.

By leveraging cloud technologies and automated workflows, organizations can ensure rapid recovery and minimal downtime in the event of system failures, all while using safe and clean images from Microsoft's Update Content Delivery Network (CDN).

In the following, further embodiments of the methods and systems shown in Fig. 1 and 2 are described, in which the second option B is chosen. This option involves the use of a business continuity operating system using e.g. a boot file such as an PXE boot file. PXE boot stands for Preboot Execution Environment which is a network booting process using a DHCP server or a TFTP server. This is a client-server-based protocol that allows computers to boot up using software that is downloaded from a network instead of a local storage and / or memory. Other than in the process / system described in connection with Fig. 3 and 4, this does not involve the downloading of an operating system image C.

The business continuity operating system (BC OS) can be e.g. a Linux kernel, providing a robust platform for the operation of the client computer system 1. That BC OC can comprise some or all of the following features:
- Mail Connectivity: Ensures users can access and send emails, maintaining communication during a crisis.
- Office communication Connectivity: Provides e.g. access to Teams, Zoom or other vide communication tools for collaboration and communication.
- Corporate Connectivity: Allows users to connect to specific corporate virtual machines, ensuring access to essential applications and data.
- Basic Spreadsheet Functionality: Offers spreadsheet capabilities for managing and analyzing data.
- Corporate Information Systems for Sales, Customer Service and Operations.
- Network LAN Drivers: Includes drivers to ensure network connectivity, enabling access to local area networks.

For example, DHCP is used to provide appropriate client network parameters and specifically the location (IP address) of a TFTP server hosting, ready for download, the initial bootstrap program (NBP) and complementary files. This involves that the client computer server system 1 can transfer an initial bootstrap program (NBP) into its own RAM using TFTP eventually boots from it. NBPs are just the first link in the boot chain process, and they generally request via TFTP a small set of complementary files in order to get running a minimalistic operating system executive. This loads its own network drivers and TCP/IP stack. At this point, the remaining instructions required to boot or install a full OS are provided not over TFTP, but using a robust transfer protocol (such as HTTP, CIFS, or NFS).

In particular, the PXE boot file can be accessed using a Content Delivery Network 30 (CDN) which can comprise a cloud service. The utilization of CDNs facilitates the caching of files at edge locations, thereby reducing the load on origin servers and significantly improving access times for end-users. The custom rescue switcher 3 of the server computer system 10 further enhances this process by offering a flexible and efficient boot management system.

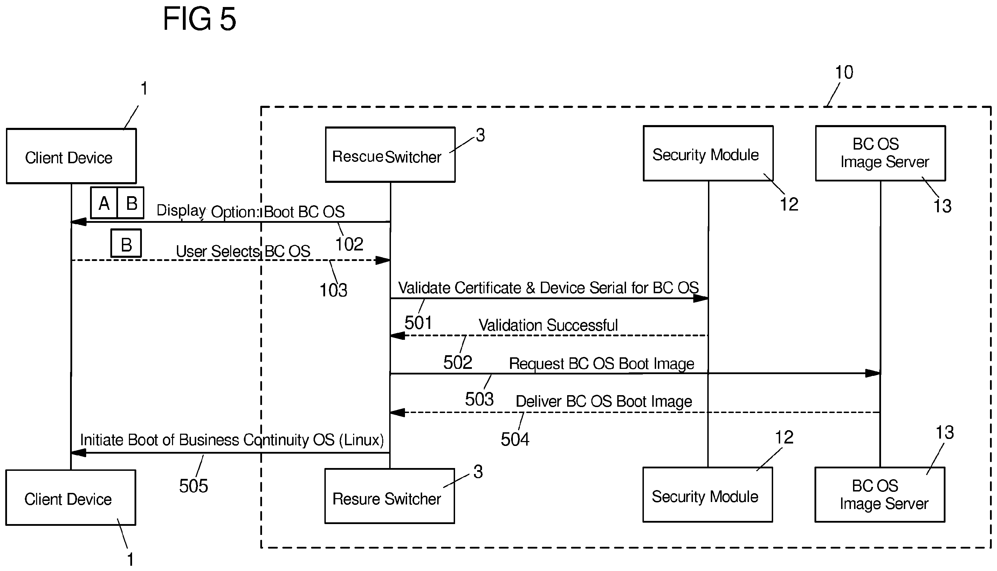

In Fig. 5, an embodiment for using the business continuity operating system is described. Here, the client computer system 1 communicates bidirectionally with a server computer system 10 comprising the rescue switcher 3, the security module 12 and the image server 13.

In a first system request step 102 (see e.g. also Fig. 1 and 2) the rescue switcher 3 transmits options A, B to the client computer system 1. As described above, the client computer system 1 automatically and / or with a user intervention selects in a choice request 103 the second option B' here.

Subsequently, a request for a certificate and device serial number validation is sent 501 from the rescue switcher 3 to the security module 12. This is to ensure that the client computer system 1 is authorized to receive the business continuity operating system. If the validation is successful 502 the business continuity operating system is requested 503 from the image server 13 and delivered 504 to the rescue switcher 3.

Then, the booting from business continuity operating system is initiated 505 on the client computer system 1.

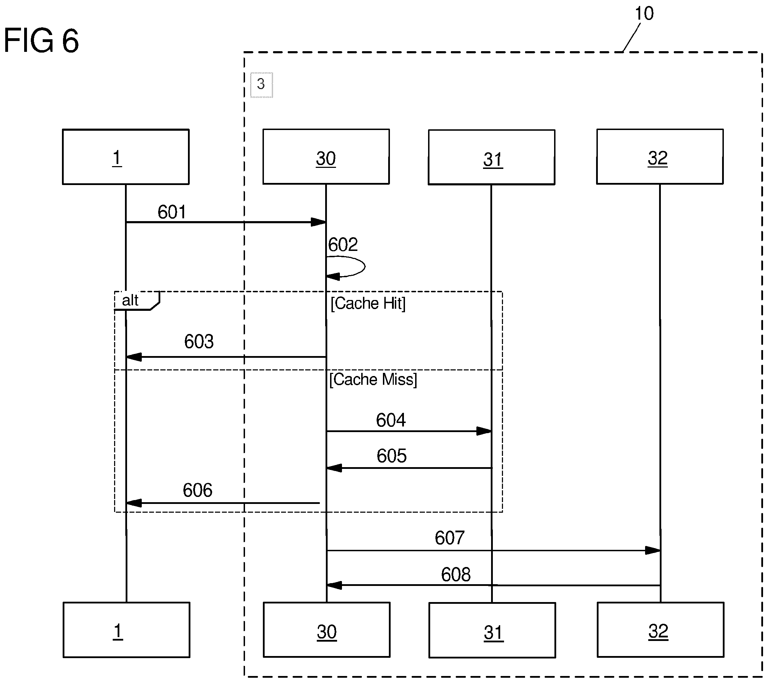

In Fig. 6, a further embodiment of the method using a business continuity operating system and PXE boot files is described. This procedure assumes that the second option B (see Fig. 1 and 2) after the boot-to-http(s) 101 has been selected. Therefore, the sequence diagram of Fig. 6 further describes the process which was termed further communication between the client computer system 1 and the server computer system 10. The server computer system 10 in the embodiment shown in Fig. 3 comprises a CDN 30, a data storage 31 and a monitor device 32.

Initially, after the selection of second option B, the client computer system 1 initiates a PXE boot file request 601 to the CDN 30. This request can e.g. use the HTTPS protocol.

The CDN 30, e.g. a cloud storage service, regularly updates and maintains the PXE boot files, so that they are up-to-date and secure.

The CDN 30 can first check 602 the cache memory for said file. The cache memory (e.g. in a cloud computer system) operates under caching rules, involving the determination of the storage duration an edge locations and indication when a PXE boot file needs to be replaced with a more current version. Furthermore, security settings, such as e.g. access control lists or HTTPS enforcement are used to protect the PXE boot file during a subsequent transmission.

The CDN 30 can respond to that in two alternative ways. If the PXE boot file are present in the cache memory, the PXE boot files are sent to the client computer system 1 (step 603). If the PXE boot files are not found in the cache memory, they are requested (step 604) from the data storage 31 and delivered to the CDN 30 (step 605). Then they are transmitted to the client computer system (step 606).

In one embodiment, the CDN 30 can determine which edge location (i.e. the system with the lowest latency) is best to serve the PXE boot files to the client computer system 1. This reduces the latency and improves the boot time for the client computer system 1.

It is also possible that the CDN 30 or the server computer system 10 checks on the proper authentication and authorization to ensure that client computer system 1 has the appropriate rights to access the PXE boot file. In case the check has a negative result, the request by the client computer system 1 is logged.

For increased security, the PXE boot files are encrypted when stored in the server computer system 10 and during transmission to the client computer system 1.

In this embodiment a monitoring process is used, in which the CDN 30 requests log information from the monitor device 32 (step 607). In response, the monitor device 32 transmits track performing data to the CDN 30 (step 608). The monitoring device 32 e.g. keeps track on the creation and distribution of the PXE boot files so the server computer device 10 has a record which of the client computer systems 1 is operating with which systems.

The monitor device 32 can e.g. raise an alarm in case it detects a misuse of a request. Furthermore, the monitor device 32 can record the client computer system's IP address, the request time, the delivery time.

The custom rescue switcher 3 which has been described e.g. in connection with the option in Fig. 2, 3, or 4 is used here to build an and monitor the PXE boot files. It can e.g. be integrated with an configuration management tool such as e.g an Ansible system for the configuration, management and deployment of the PXE boot files, ensuring that the latest boot images are used and are they are properly configured. The custom rescue switcher 3 supports multiple operating systems and configurations.

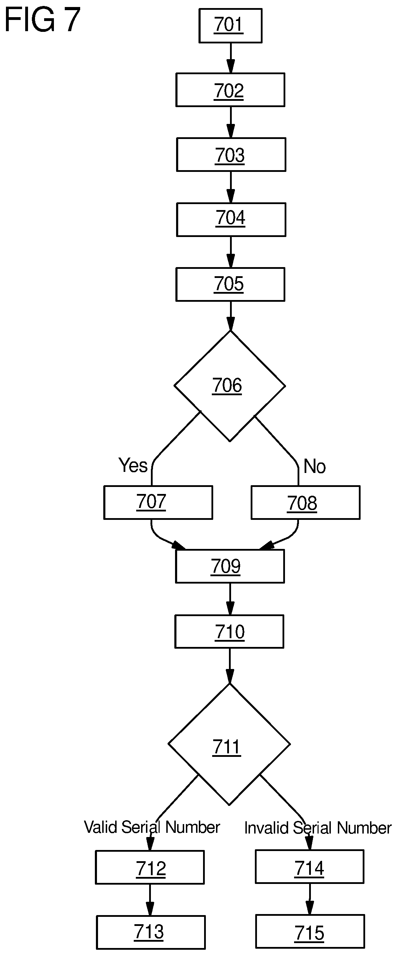

In Fig. 7, an example of the use of an PXE boot file in the form of the generally known iPXE boot file is described.

At the start (step 701), the server computer system 10 is configuring an iPXE script (step 702). An iPXE script is a plain text file starting with the line "#!ipxe" and containing a sequence of iPXE commands.

The script can be used to build an iPXE image (step 703) which is subsequently deployed to the CDN for further use.

If in step 705 a boot request from the client computer system 1 is received by the server computer system 10, a test is performed in step 706 if an iPXE image is available. If yes, the iPXE image is used in step 407, if not, an iPXE image is fetched in step 408 from the origin.

In any case, in step 709 the iPXE image is available at the CDN and can be processed in step 710 at the CDN.

In step 711, an authentication for the client computer system 1 step is performed. If the serial number or another ID of the client computer system 1 is valid, the client computer system gets access to the iPXE file in step 712 and it is served to that system. If the serial number or another ID of the client computer system 1 is not valid, the access is denied (step 714) and the unauthorized access attempt is logged (step 715).

### List of reference numerals

- 1: client computer system
- 2: embedded BIOS setting
- 3: rescue switcher

- 10: server computer system, cloud computer system
- 11: entry point for boot-to-http(s) request
- 12: security module
- 13: image server

- 30: CDN system
- 31: data storage
- 32: monitor device

- 101: boot-to-http(s) request
- 102: system request
- 103: choice request
- 104: further communication between the client computer system and the server computer system

- 201: request boot image from CDN
- 202: delivering rescue image switcher image
- 203: loading of the rescue switcher interface
- 204: request of certificate and device serial for business continuity operating system
- 205: validation successful
- 206: request of certificate and device serial for business continuity operating system
- 207: validation successful

- 301: prompting client computer system for disk wipe
- 302: confirming disk wipe to rescue switcher
- 303: request of certificate and device serial for operating system image
- 304: validation successful
- 305: request of operating system image from image server
- 306: delivery of operating system image to rescue switcher
- 307: initiation of booting on client computer system

- 401: Boot to a WinPE
- 402: display a user prompt
- 403: check for proper answer
- 404: reboot system without operating system reimaging
- 405: disk preparation
- 406: operating system image download
- 407: expanding operating system into memory / disk
- 408: installing drivers
- 409: post- installation process
- 410: rebooting client computer system

- 501: request of certificate and device serial for business continuity operating system
- 502: validation successful
- 503: request of business continuity operating system from image server
- 504: delivery of business continuity operating system to rescue switcher
- 505: initiation of booting on client computer system

- 601: initiate request of PXE boot file
- 602: checking cache memory at CDN
- 603: serve PXE boot files
- 604: request PXE boot files from data storage
- 605: delivery of the PXE boot files to the CDN
- 606: transmission of PXE boot files to the client computer system
- 607: requesting log file from monitor device
- 608: performance tracking

- 701: Start
- 702: configure iPXE script
- 703: build iPXE image
- 704: deploy iPXE image to CDN
- 705: Client computer systems boot request
- 706: iPXE image available
- 707: serve iPXE image to client computer system
- 708: fetch iPXE image from origin
- 709: CDN
- 710: processing on CDN
- 711: authentication of client computer system
- 712: allowing access
- 713: serving iPXE image
- 714: deny access
- 715: logging of unauthorized access

- A: first option, downloading an operating system image
- B: second option
- A', B': selected option for server computer system

- C: operating system image
- X: data for the client computer system

## Claims

1. System for bidirectionally operating a client computer system (1) connectable or connected with a server computer system (10) with
the client computer system (1) configured to send a boot-to-https(s) request (101) to the server computer system (10), in particular a cloud computer system,
in reply to the boot-to-http(s) request (101), the server computer system (10) is configured to send a system request (102) to the client computer system (1), the system request (102) comprising an instruction to the client computer systems (1) with at least two options (A, B) for initiating and / or controlling the further communication with between the client computer system (1) and the server computer system (10),
the client computer system (1) further configured to reply to the system request (102) with a choice request (103) based on one (A'; B') of the at least two options (A, B) to the server computer system (10) initiating and / or controlling the further communication (104) between the client computer system (1) and the server computer system (10).

2. System according to claim 1, wherein the boot-to-http(s) request (101) is enabled through an embedded BIOS setting (2) of the client computer system (1), the BIOS setting usable during a start-up procedure of the client computer system (1).

3. System according to claim 1 or 2, wherein a signal from the client computer system (1) triggers a program on a hardware device, in particular an USB-Stick, connected to the client computer system (1), the hardware device then enabling the boot-to-http(s) request (101).

4. System according to at least one of the preceding claims, wherein the boot-to-http(s) request (101) and / or the selection of one of the options (A, B) is automatically triggered at the client computer system (1) if a predetermined condition and / or parameter of the client computer system (1) is met and / or an user interaction at the client computer system (1) triggers the boot-to-http(s) request (101).

5. System according to at least one of the preceding claims, wherein a first option (A) comprises the instruction to download an operating system image (C) from the server computer system (10), in particular from a cloud system of the server computer system (10) and / or the instruction for a reimaging of the client computer system (1) with the operating system image (C).

6. System according to claim 5, wherein before the reimaging with the operating system image (C) or before the initialization of the business continuity operating system, a file deletion, a memory clean or a disk wipe is automatically performed on the client computer system (1).

7. System according to at least one of the claims 1 to 4, wherein a second option (B) comprises instructions to use and / or install a business continuity operating system on the client computer system (1), in particular using a PXE boot file.

8. System according to claim 7, wherein the business continuity system comprises a mail connectivity function, an office connectivity function, a corporate connectivity function, a spreadsheet function, a corporate information function and / or network function.

9. System according to at least one of the preceding claims, wherein the server computer system (10) automatically selects which service or image server (13) of the server computer system (10) is used for selecting the operating system image (C) to the client computer system (10), in particular depending on the lowest latency.

10. System according to at least one of the preceding claims, wherein the server computer system (10) is configured to validate and / or authenticate the operating system image (C), the business continuity operating system and / or the client computer system (1).

11. System according to at least one of the preceding claims, wherein the operating system image (C) or the business continuity operating system comprise a Windows system, an Android system, a Unix system, Chrome system, Mac OS system or an iOS system.

12. System according to at least one of the preceding claims, wherein after the reimaging with the operating system image (C) or after the initialization of the business continuity operating system a post installation routine is performed.

13. System according to at least one of the preceding claims, wherein after the reimaging with the operating system image (C) or after the initialization of the business continuity operating system the client computer systems (1) are automatically rebooted and in particular connected to a computer network.

14. Method for the bidirectional operation of a client computer system (1) connected with a server computer system (10) wherein
a) the client computer system (1) sends a boot-to-https(s) request (101) to the server computer system (10), in particular a cloud computer system,
b) in reply to the boot-to-http(s) request (101), the server computer system (10) sends a system request (102) to the client computer system (1), the system request (102) comprising an instruction to the client computer systems (1) with at least two options (A, B) for initiating and / or controlling the further communication between the client computer system (1) and the server computer system (10),
c) the client computer system (1) replying to the system request (102) with a choice request (103) based on one (A', B') of the at least two options (A, B) to the server computer system (10) initiating and / or controlling the further communication (104) between the client computer system (1) and the server computer system (10).

15. A computer-readable medium comprising instructions which, when executed by a computer, causes the computer to carry out the method of claim 14.

16. A data carrier signal carrying a computer program which, when executed by a computer, causes the computer to carry out the method of claim 14.

## Amended claims

### Amended claims in accordance with Rule 137(2) EPC.

1. System for bidirectionally operating a client computer system (1) connectable or connected with a server computer system (10) with
the client computer system (1) configured to send a boot-to-https(s) request (101) to the server computer system (10), in particular a cloud computer system,
in reply to the boot-to-http(s) request (101), the server computer system (10) is configured to send a system request (102) to the client computer system (1), the system request (102) comprising an instruction to the client computer systems (1) with at least two options (A, B) for initiating and / or controlling the further communication with between the client computer system (1) and the server computer system (10),
wherein a first option (A) comprises the instruction to download an operating system image (C) from the server computer system (10), i.e. from a cloud system of the server computer system (10) and / or the instruction for a reimaging of the client computer system (1) with the operating system image (C) and
wherein a second option (B) comprises instructions to use and / or install a business continuity operating system on the client computer system (1) using a PXE boot file,
the client computer system (1) further configured to reply to the system request (102) with a choice request (103) based on one (A'; B') of the at least two options (A, B) to the server computer system (10) initiating and / or controlling the further communication (104) between the client computer system (1) and the server computer system (10).

2. System according to claim 1, wherein the boot-to-http(s) request (101) is enabled through an embedded BIOS setting (2) of the client computer system (1), the BIOS setting usable during a start-up procedure of the client computer system (1).

3. System according to claim 1 or 2, wherein a signal from the client computer system (1) triggers a program on a hardware device, in particular an USB-Stick, connected to the client computer system (1), the hardware device then enabling the boot-to-http(s) request (101).

4. System according to at least one of the preceding claims, wherein the boot-to-http(s) request (101) and / or the selection of one of the options (A, B) is automatically triggered at the client computer system (1) if a predetermined condition and / or parameter of the client computer system (1) is met and / or an user interaction at the client computer system (1) triggers the boot-to-http(s) request (101).

5. System according to at least one of claims 1 to 4, wherein before the reimaging with the operating system image (C) or before the initialization of the business continuity operating system, a file deletion, a memory clean or a disk wipe is automatically performed on the client computer system (1).

6. System according to claim 1, wherein the business continuity system comprises a mail connectivity function, an office connectivity function, a corporate connectivity function, a spreadsheet function, a corporate information function and / or network function.

7. System according to at least one of the preceding claims, wherein the server computer system (10) automatically selects which service or image server (13) of the server computer system (10) is used for selecting the operating system image (C) to the client computer system (10), in particular depending on the lowest latency.

8. System according to at least one of the preceding claims, wherein the server computer system (10) is configured to validate and / or authenticate the operating system image (C), the business continuity operating system and / or the client computer system (1).

9. System according to at least one of the preceding claims, wherein the operating system image (C) or the business continuity operating system comprise a Windows system, an Android system, a Unix system, Chrome system, Mac OS system or an iOS system.

10. System according to at least one of the preceding claims, wherein after the reimaging with the operating system image (C) or after the initialization of the business continuity operating system a post installation routine is performed.

11. System according to at least one of the preceding claims, wherein after the reimaging with the operating system image (C) or after the initialization of the business continuity operating system the client computer systems (1) are automatically rebooted and in particular connected to a computer network.

12. Method for the bidirectional operation of a client computer system (1) connected with a server computer system (10) wherein
a) the client computer system (1) sends a boot-to-https(s) request (101) to the server computer system (10), in particular a cloud computer system,
b) in reply to the boot-to-http(s) request (101), the server computer system (10) sends a system request (102) to the client computer system (1), the system request (102) comprising an instruction to the client computer systems (1) with at least two options (A, B) for initiating and / or controlling the further communication between the client computer system (1) and the server computer system (10),
c) wherein the first option (A) comprises the instruction to download an operating system image (C) from the server computer system (10), i.e. from a cloud system of the server computer system (10) and / or the instruction for a reimaging of the client computer system (1) with the operating system image (C) and
wherein the second option (B) comprises instructions to use and / or install a business continuity operating system on the client computer system (1) using a PXE boot file,
d) the client computer system (1) replying to the system request (102) with a choice request (103) based on one (A', B') of the at least two options (A, B) to the server computer system (10) initiating and / or controlling the further communication (104) between the client computer system (1) and the server computer system (10).

13. A computer-readable medium comprising instructions which, when executed by a computer, causes the computer to carry out the method of claim 12.

14. A data carrier signal carrying a computer program which, when executed by a computer, causes the computer to carry out the method of claim 12.
